(19) **Europäisches Patentamt**

**European Patent Office**

**Office européen des brevets**

(11) Veröffentlichungsnummer: **0 150 078 B1**

## (12) EUROPÄISCHE PATENTSCHRIFT

(45) Veröffentlichungstag der Patentschrift: **29.05.91**

(21) Anmeldenummer: **85200035.5**

(22) Anmeldetag: **16.01.85**

(51) Int. Cl.⁵: **G11B 15/10, G11B 15/18**

(54) **Schaltvorrichtung an einem Magnetbandkassettengerät.**

(30) Priorität: **19.01.84 DE 3401645**

(43) Veröffentlichungstag der Anmeldung:
**31.07.85 Patentblatt 85/31**

(45) Bekanntmachung des Hinweises auf die
Patenterteilung:
**29.05.91 Patentblatt 91/22**

(84) Benannte Vertragsstaaten:
**DE FR GB IT**

(56) Entgegenhaltungen:
**EP-A- 121 282        DE-A- 2 540 531**
**DE-A- 2 636 632        DE-A- 3 022 247**
**DE-C- 3 312 135        GB-A- 442 448**
**US-A- 2 923 488**

(73) Patentinhaber: **Philips Patentverwaltung
GmbH
Wendenstrasse 35 Postfach 10 51 49
W-2000 Hamburg 1(DE)DE**

Patentinhaber: **N.V. Philips' Gloeilampenfabrieken
Groenewoudseweg 1
NL-5621 BA Eindhoven(NL)FR GB IT**

(72) Erfinder: **Ruyten, Henricus
Volpertshäuser Strasse 14
W-6330 Wetzlar(DE)**

(74) Vertreter: **Kupfermann, Fritz-Joachim,
Dipl.-Ing. et al
Philips Patentverwaltung GmbH Wendenstrasse 35 Postfach 10 51 49
W-2000 Hamburg 1(DE)**

## Beschreibung

Die Erfindung bezieht sich auf ein Magnetbandkassettengerät mit einer Bedienungsstange, wobei am Gerätechassis ein Schalter angeordnet ist. Ein derartiges Magnetbandkassettengerät ist in der EP-A 121 282 beschrieben die unter Art. 54(3) fällt und somit für die Beurteilung der erfinderischen Tätigkeit nicht relevant ist. Die Bedienungsstange wird dabei beim Einlegen einer Kassette ausgefahren und beim Auswerfen der Kassette eingedrückt. Eine Kopfplatte wird für den Bandbetrieb nach vorne geschoben und für die Umkehrung des Bandbetriebes zurückgeschoben. Am Gerätechassis ist ein Schalter angeordnet, der Schaltkontakte aufweist.

Aus der DE-A 26 36 632 ist ein Magnetbandkassettengerät mit einem elektrischen Schalter mit einem Schalthebel bekannt, der in drei verschiedene Stellungen schwenkbar ist. Der Schalthebel ist in eienr mittleren und in einer seitlichen Stellung verrastbar und nimmt damit in diesen beiden Stellungen stabile Lagen ein. In einer dritten Schwenklage verrastet der Schalthebel nicht, wodurch er in dieser Lage instabil ist und der Schalthebel unbelastet wieder in die Mittelstellung zurückkehrt.

Aus der GB-PS 442 448 ist es darüber hinaus bekannt, einen Schalthebel eines Schalters mit zwei flachen Wänden zu versehen, die mit einer Kontaktfeder zusammenwirken. Die beiden flachen Wände geben stabile Lagen des Schalthebels vor, und zwar einerseits eine Stellung, in der der Schalter geöffnet ist, und andererseits eine Stellung, in der der Schalter geschlossen ist. Eine instabile Lage des Schalters wird definiert durch eine Nase, die sich zwischen den beiden flachen Wänden ausbildet. Um einen solchen Schalter in einem Magnetbandkassettengerät zum Schalten unterschiedlicher Gerätefunktionen einsetzen zu können, ist ein bestimmtes Zusammenwirken zwischen dem Schalter und Teilen des Gerätes erforderlich.

Es ist Aufgabe der Erfindung, bei einem Magnetbandkassettengerät mit einer Bedienungsstange unter Verwendung eines Schalters mit einem Schalthebel die Möglichkeit zu schaffen, mittels zweier unterschiedlicher Stellorgane des Gerätes unterschiedliche Schaltfunktionen auszuüben.

Die gestellte Aufgabe ist erfindungsgemäß gelöst mit einem Magnetbandkassettengerät mit einer Bedienungsstange die beim Einlegen einer Kassette ausgefahren und beim Auswerfen der Kassette eingedrückt wird, und einer Kopfplatte, die für den Bandbetrieb nach vorne geschoben und für die Umkehrung des Bandbetriebes zurückgeschoben wird, wobei am Gerätechassis ein Schalter angeordnet ist, der in seinem Gehäuse einen um eine Schwenkachse schwenkbaren Schalthebel aufweist, der auf Schaltkontakte einwirkt und der in drei Betriebslagen stellbar ist, wobei der Schalthebel eine mittlere Stellung gegenüber den Schaltkontakten aufweist, in der die Schaltkontakte offen bleiben, und wobei beiderseits der mittleren Schalthebelstellung zwei Schaltkontakte schließende Schließstellungen vorhanden sind, von denen die eine stabil und die andere instabil ist, daß die Bedienungssstange mit einer Schaltnase versehen ist, die beim Eindrücken der Bedienungsstange den Schalthebel aus der mittleren Stellung in die instabile Schließstellung schwenken und dort festhalten kann, wodurch vom Bandbetrieb auf Radiobetrieb umgeschaltet wird, und beim Ausfahren der Bedienungsstange aus der instabilen Schließstellung in die mittlere Stellung freigeben kann, wodurch vom Radiobetrieb auf Bandbetrieb umgeschaltet wird, und an der Kopfplatte zwei auf Abstand angeordnete Ansätze vorgesehen sind, von denen der erste Ansatz den Schalthebel aus der mittleren Stellung in die stabile Schließstellung überführt, wodurch Tonspuren des Kopfes angeschaltet werden, wenn die Kopfplatte für den Bandbetrieb nach vorne geschoben wird, und der zweite Ansatz den Schalthebel aus der stabilen Schließstellung in die mittlere Stellung umlegt, wodurch die Tonspuren des Kopfes umgeschaltet werden, wenn die Kopfplatte für die Umkehrung des Bandbetriebes zurückgeschoben wird, wobei der Schalthebel in seiner stabilen Schließstellung und seiner mittleren Stellung von den Ansätzen freiliegt.

Da die Ansätze an der Kopfplatte den Schalthebel nur zum Zwecke des Umlegens in eine der stabilen Stellungen berühren, hat die Kopfplatte im übrigen aber genügend Spiel, um sich bewegen zu können, ohne den Schalthebel umzulegen. Dies gilt beispielsweise für den normalen Betrieb ohne Spurumschaltung, wenn vom Spielbetrieb in Schnellspulen übergegangen werden soll und zurück. Ohne daß diese Schaltmöglichkeiten beeinflußt werden, kann der Schalter zusätzlich in eine instabile Stellung gebracht werden von einer Bedienungsstange, beispielsweise für Stop-Betrieb oder Umschalten von Radio auf Deck-Betrieb und umgekehrt. Sobald die Bedienungsstange den Schalthebel freigibt, kann wieder die Kopfplatte mit Umschaltungen in Funktion treten.

Nach einer weiteren Ausgestaltung der Erfindung ist vorgesehen, daß die Verbindungslinie zwischen den Ansätzen etwa parallel zur Bewegungsrichtung der Kopfplatte liegt und daß der Abstand zwischen den Ansätzen derartig ist, daß eine Bewegung der Kopfplatte aus einer Spiellage in eine vom Magnetband weg zurückgezogene Spullage erreichbar ist, ohne den Schalthebel zu betätigen. Dies ist eine besonders günstige Anordnung, um vom Spielbetrieb zum Schnellspulbetrieb übergehen zu können, ohne daß die Tonspuren von der einen Abspielrichtung in die andere Abspielrichtung umgeschaltet werden.

Nach einer weiteren Ausgestaltung der Erfindung ist vorgesehen, daß vor dem Erreichen der schaltenden Stellung der Bedienungsstange die Kopfplatte immer den Schalthebel in die mittlere Stellung geschwenkt hat. Damit ist sichergestellt, daß die Bedienungsstange immer dann, wenn sie den Schalthebel beeinflussen soll, auch den Schalthebel in ihrem Verfahrweg vorfindet, um ihn so aus der mittleren Stellung in die instabile Stellung schwenken zu können.

Die Erfindung wird anhand des in der Zeichnung dargestellten Ausführungsbeispieles näher erläutert. Es zeigen:

Fig. 1 eine Ansicht des Magnetbandkassettengerätes von der Antriebsseite her,

Fig. 2A eine schaubildliche vergrößerte Darstellung eines Rastmechanismus des Gerätes in einer ersten Lage,

Fig. 2B den Rastmechanismus nach Fig. 2A in einer zweiten Lage,

Fig. 3 das Magnetbandkassettengerät von der Tonkopfseite her gesehen in einer Spielstellung einer ersten Bandlaufrichtung,

Fig. 4 das Magnetbandkassettengerät von der Tonkopfseite her gesehen in einer zu Fig. 3 entgegengesetzten Bandrichtung,

Fig. 5 das zusammenwirken einer Leitschlitzanordnung mit Steuermitteln und Kopfplatte in einer Explosionsdarstellung,

Fig. 6 die verschiedenen Lagen einer Steuerplatte zur Steuerung der Leitschlitzanordnung und der Kopfplatte,

Fig. 7 eine geöffnete Schalteinrichtung, deren Schalthebel in zwei stabile und eine instabile Schaltstellung schwenkbar ist, die in verschiedenen Linien dargestellt sind,

Fig. 8 schaubildliche Darstellungen verschiedener Schalterstellungen.

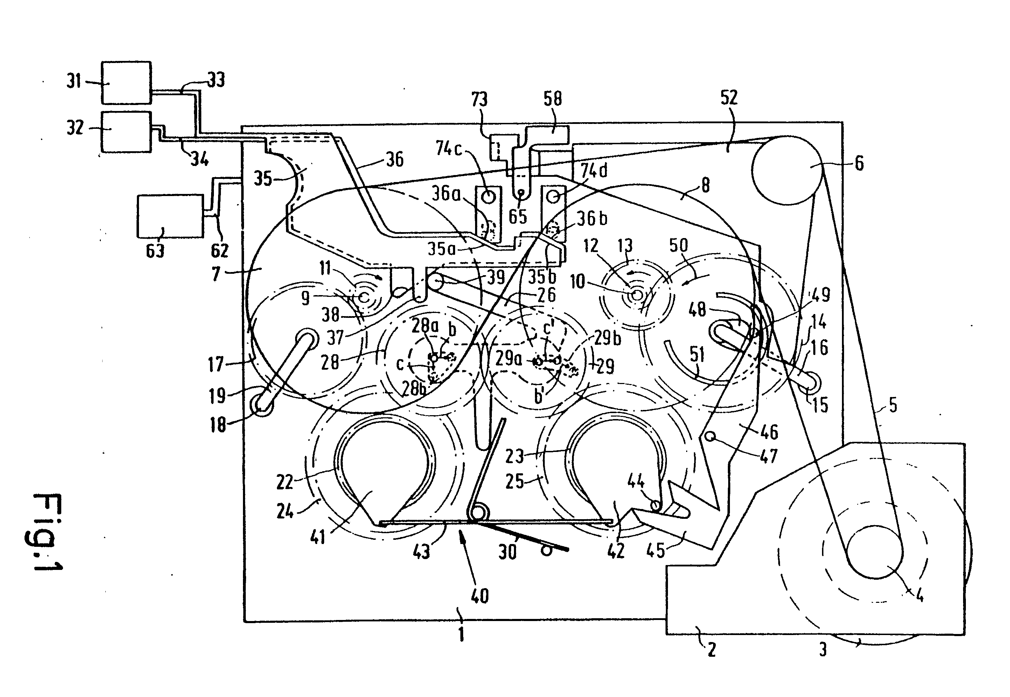

Das Magnetbandkassettengerät nach der Erfindung, wie in Fig. 1 dargestellt, weist ein Gestell 1 auf, das über eine Stütze 2 einen nur in einer Richtung umlaufenden Antriebsmotor 3 trägt. Das Abriebsritzel 4 des Motors 3 führt eine Peese 5, die über eine Umlenkrolle 6 über Schwungräder 7 und 8 derart geführt ist, daß die Schwungräder gegensinnig drehen. Die Schwungräder 7 und 8 sind im Gestell 1 gelagert. Die Schwungscheibe 7 ist fest verbunden mit einer Tonwelle 9, und die Schwungscheibe 8 ist fest verbunden mit einer Tonwelle 10. Weiterhin ist die Schwungscheibe 7 mit einem Zahnrad 11 verbunden, und die Schwungscheibe 8 ist mit einem Zahnrad 12 verbunden. Über eine Rutschkupplung ist koaxial zu dem Zahnrad 12 ein weiteres Zahnrad 13 auf der Schwungscheibe 8 drehbarangeordnet. Mit dem Zahnrad 12 auf der Schwungscheibe 8 ist ständig kämmend ein als Zahnrad ausgebildetes Schaltrad 14 in Eingriff. Dieses Zahnrad 14 ist schwenkbar um eine Achse 15. Die Achse 15 trägt einen in Fig. 1 schematisch dargestellten Schwenkarm 16, auf dem drehbar das Schaltrad 14 gelagert ist. In ähnlicher Weise kämmt mit dem Zahnrad 11 ständig ein Zahnrad 17. Dieses Zahnrad 17 ist drehbar um eine Schwenkachse 18 mittels eines schematisch dargestellten Schwenkarmes 19.

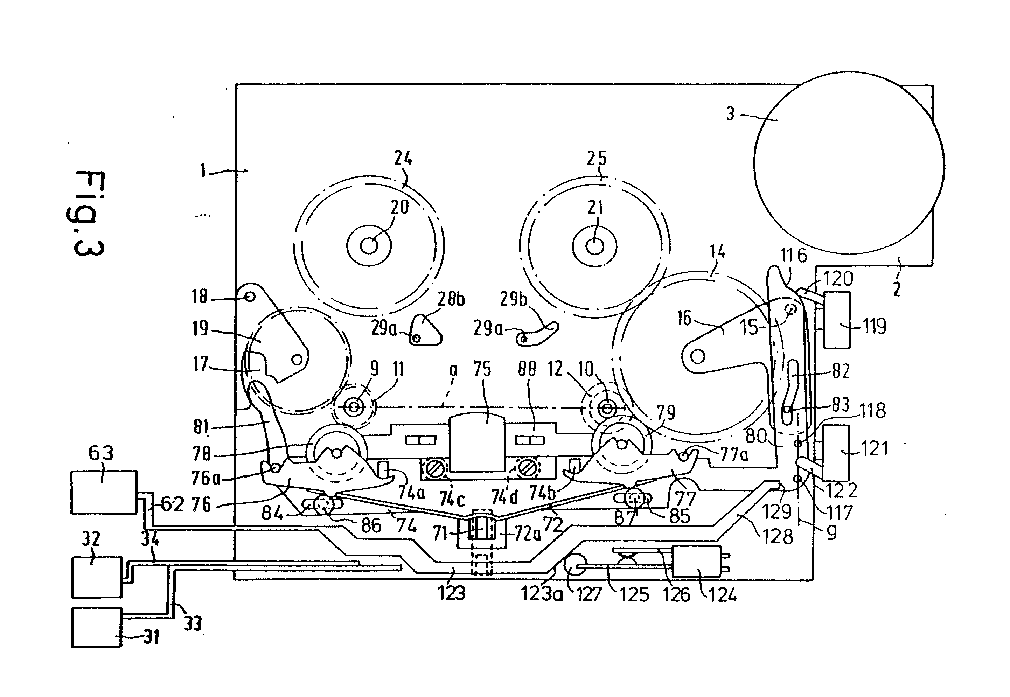

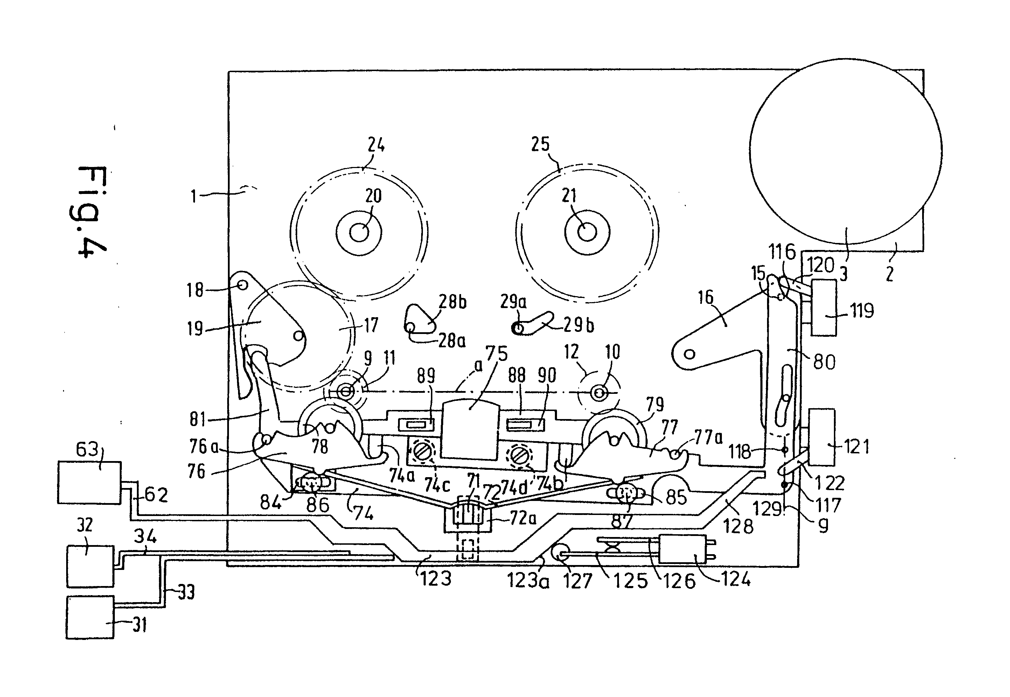

Wie auch in Fig. 3 und 4 dargestellt, sind drehbar im Gestell 1 Wickeldorne 20 und 21 gelagert. Diese Wickeldorne 20 und 21 sind fest verbunden mit Schnellspulrädern 22, 23. Über Rutschkupplungen sind mit den Wickeldornen 20, 21 Spielräder 24, 25 verbunden.

In Fig. 3 ist dargestellt, wie das Spielrad 25 über das Schaltrad 14 von dem Zahnrad 12 angetrieben wird. In Fig. 4 ist auf ähnliche Weise zu sehen, wie das Spielrad 24 über das Zahnrad 11 angetrieben wird.

Ein Bügel 26, der verschiebbar im Gestell 1 gelagert ist, trägt nebeneinander zwei Zahnräder 28, 29 (siehe Fig. 1). Eine Feder 30 drückt den Bügel 26 immer in eine in Fig. 1 dargestellte Ausgangsposition.

Der Bügel 26 trägt zwei Stifte 28a und 29a, die in einem dreieckigen Loch 28b bzw. einem Schlitz 29b verschiebbar sind im Gestell 1.

Zum schnellen Vor- und Rücklauf sind zwei Tasten 31 und 32 vorgesehen. Über Tastenstangen 33 und 34 sind diese Tasten 31, 32 mit Schiebern 35, 36 verbunden. Diese Schieber 35 und 36 wirken auf den Bügel 26 ein. Dazu ist der Schieber 35 mit einem Ansatz 37 versehen, der Schieber 36 trägt entsprechend eine Auflauffläche 38. Der Ansatz 37 und die Auflauffläche 38 arbeiten auf einen Stift 39 des Bügels 26. Weiter sind die Schieber 35, 36 mit Auflaufflächen 35a, 35b bzw. 36a, 36b versehen, die arbeiten können auf Stifte 74c, 74d einer Kopfplatte 74 (Fig. 1, 3, 4).

Wenn durch Eindrücken der Schnellspultaste 31 der Ansatz 37 gegen den Stift 39 des Bügels 26 drückt, kommt erst das Zahnrad 29 in Eingriff mit dem Zahnrad 13. Dabei macht der Stift 28a eine Bewegung in Richtung des Pfeiles b und der Stift 29a eine Bewegung in Richtung des Pfeiles c'. Bei weiterer Bewegung fährt der Stift 29a weiter in Richtung des Pfeiles b' und kommt das Zahnrad 29 in Eingriff mit dem Zahnrad 23. Das Magnetband wird jetzt mit dem Wickeldorn 21 schnell aufgewickelt. Wird die andere Schnellspultaste 32 eingedrückt, dann wirkt die Auflauffläche 38 auf den Stift 39 des Bügels 26 ein, wodurch der Stift 28a in Richtung des Pfeiles c und der Stift 29a in Richtung des Pfeiles c' fährt, wodurch das Zahnrad 29 mit dem Zahnrad 13 in Eingriff und das Zahnrad 28 mit dem Zahnrad 22 in Eingriff kommt. Dadurch wird der andere Wickeldorn 21 zum Schnellspulen angetrieben.

Wenn die Kopfplatte 74 in eine Spielstellung gelangt ist, nehmen die Stifte 74c, 74d eine der gestrichelten Lagen in Fig. 1 ein. Die Lagen stimmen überein mit den Lagen gemäß Fig. 3 bzw. Fig. 4 Das Eindrücken der Bedienungsstange 33 bzw. 34 hat jetzt zur Folge, daß über die Auflauffläche 35a, 35b bzw. 36a, 36b die Stifte 74c, 74d und damit die Kopfplatte 74 nach links geschoben werden, so daß ein Tonkopf 75 und Andruckrollen 78, 79 abgehoben werden von dem Magnetband.

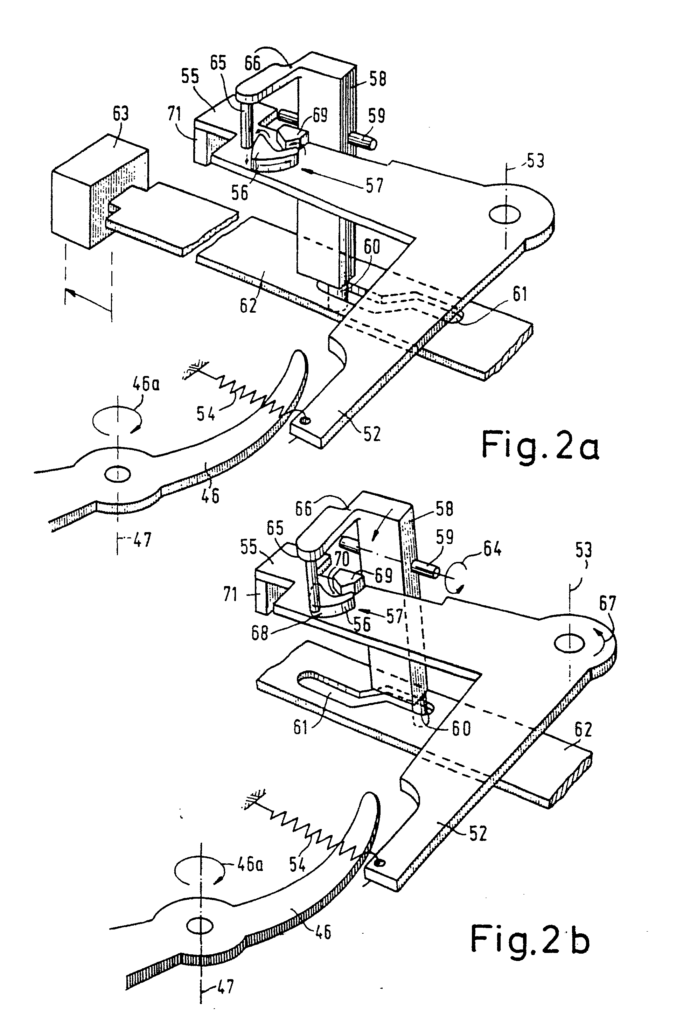

Ein Detektionsorgan 40, bestehend aus zwei Scheiben 41, 42 und einer Verbindungsstange 43, ist über Rutschkupplungen mit den Wickeldornen 20, 21 verbunden. Auf der Scheibe 42 ist ein Stift 44 angeordnet, der innerhalb einer Schaltgabel 45 liegt. Die Schaltgabel 45 ist an einem Schaltelement 46 angeordnet, das um ein Lager 47 drehbar ist (vergl. auch Fig. 2A und 2B). Das Schaltrad 14 trägt in seiner Mitte erhaben vorstehend einen ein wenig ellipsenförmigen Nocken 48. Das Schaltelement 46 greift über das Schaltrad 14 und trägt einen Stift 49, der bei nach innen geschwenktem Schaltelement 46 um den Nocken 48 herumfahren kann bei Drehung des Schaltrades in Richtung eines Pfeiles 50. Um den Hocken 48 herum erstreckt sich in einem größeren Abstand eine erhaben aus dem Schaltrad 14 herausstehende, spiralformige Steuerkurve 51. Auch diese Steuerkurve 51 kann mit dem Stift 49 an dem Schaltelement 46 zusammenwirken, und zwar immer dann, wenn das Detektionsorgan den Bandstillstand feststellt. In diesem Fall drückt der Stift 44 nicht mehr gegen die Schaltgabel 45, wodurch der Stift 49 am Schaltelement 46 nicht mehr nach innen in Richtung auf den Nocken 48 belastet wird, sondern stehen bleibt und bei fortgehender Drehung des Schaltrades 14 in Richtung des Pfeiles 50 auf die Außenstite der Steuerkurve 51 gelangt. Weil die Steuerkurve 51 spiralförmig ist, wird das Schaltelement 46 im Uhrzeigersinn um sein Lager 47 verschwenkt, wodurch das Schaltelement 46 gegen ein Verbindungselement 52 gedrückt wird.

Das Verbindungselement 52 ist ein doppelarmiger Hebel, der um ein Lager 53 schwenkbar ist. Wie aus den schaubildlichen Darstellungen in Fig. 2A und 2B zu erkennen ist, ist das Verbindungselement 52 aufgrund der Wirkung einer Feder 54 im Uhrzeigersinn federbelastet. Damit spannt die Bewegung des Schaltelementes 46 die Feder 54.

Der von dem Angriffspunkt des Schaltelementes 46 abgewandte Hebelarm 55 des Verbindungselementes 52 trägt eine Herzkurve 56, die zu einem Rastmechanismus 57 gehört. Zu dem Rastmechanismus 57 gehört auch ein Rasthebel 58, der um eine Achse 59 verschwenkbar ist. Die Achse 59 liegt parallel zu der Oberfläche des Gestelles 1 und zu einer gedachten Verbindungslinie a zwischen den Tonwellen 9 und 10. Der Rasthebel 58 trägt auf der zur Herzkurve 56 gerichteten Seite einen Führungsstift 60, der in einem Führungsschlitz 61 in einer Stange 62 einer Stop/Auswurftaste 63 vorgesehen ist. Der Fuhrungsschlitz 61 hat einen solchen Verlauf, daß der Rasthebel 58, wie sich aus Fig. 2B ergibt, bei ausgeschobener Stop/Auswurftaste um die Achse 59 in Richtung eines Pfeiles 64 verschwenkt wird. Das Nach-Außen-Schieben der Stop/Auswurftaste 63 bzw. der Stange 62 erfolgt auf nicht dargestellte Weise durch das Einschieben einer Magnetbandkassette in das Gerät. Fig. 2A zeigt die Stange 62 in der eingeschobenen Stellung, während die Fig. 2B die Stange 62 in ausgeschobener Stellung zeigt.

Der Rasthebel 58 trägt einen Raststift 65, der in die Herzkurve 56 einfahrbar ist und die Herzkurve umfahren kann. Die Umfahrbarkeit wird z. B. über ein Filmgelenk 66 herbeigeführt. In Fig. 2A liegt der Stift 65 oberhalb der Herzkurve 56, da die Stange 62 eingedrückt ist. In Fig. 2B, wo die Stange 62 ausgefahren ist, ist der Stift 65 in den Bereich der Herzkurve 56 hineingefahren. Damit kann der Stift 65 mit der Herzkurve 56 zusammenwirken, wenn das Schaltelement 46 das Verbindungselement 52, wie in der Darstellung nach Fig. 2B, entgegen dem Uhrzeigersinn in Richtung eines Pfeiles 67 verschwenkt wird. Bei diesem Verschwenken ist der Stift 65 an einer Seitenwand 68 der Herzkurve 56 entlang gelaufen. Ein Führungsnocken 69 sorgt dafür, daß der Stift 65 in eine Mulde 70 der Herzkurve 56 einfällt.

Am Hebelarm 55 ist ein Nocken 71 angeordnet. Dieser Nocken 71 wirkt, wie sich aus den Fig. 3 und 4 ergibt, mit einer Blattfeder 72 zusammen und erstreckt sich durch einen Längsschlitz 73 im Gestell 1 hindurch. Die Blattfeder 72 drückt mit ihren freien Enden gegen Halterungen 76, 77, die auf einer Kopfplatte 74 gelagert sind. Diese Kopfplatte 74 trägt in ihrer Mitte einen Tonkopf 75 und beiderseits des Tonkopfes 75 die Halterungen 76, 77, in denen Andruckrollen 78, 79 gelagert sind. Die Halterungen werden gegen Anschläge 74a, 74b der Kopfplatte 74 gedrückt.

Die Kopfplatte 74 hat abgewinkelte Enden 80, 81. Das abgewinkelte Ende 80 weist einen Schlitz 82 auf, in dem ein Stift 83 verschiebbar ist, der auf dem Schwenkarm 16 befestigt ist. Dadurch ist in der Stellung nach Fig. 3 der Schwenkarm 16 derart um die Achse 15 verschwenkt, daß das Schaltrad 14 kämmt mit dem Spielrad 25 und dem Zahnrad 12. Dementsprechend ist in Fig. 4 dargestellt, daß das abgewinkelte Ende 81 der Kopfplatte 74 den Schwenkarm 19 um die Schwenkachse 18 geschwenkt hat, wodurch das Zahnrad 17 mit dem Spielrad 24 und dem Zahnrad 11 kämmt. Dementsprechend ist in der Stellung nach Fig. 3 die Druckrolle 79 gegen die Tonwelle 10 gedrückt, während in der Stellung nach Fig. 4 die Andruckrolle 78 gegen die Tonwelle 9 gedrückt ist.

In der Kopfplatte 74 sind parallel zu der Verbindungslinie zwischen den Tonwellen 9, 10 Längsschlitze 84, 85 angeordnet, in denen Leitstifte 86, 87 verschiebbar sind.

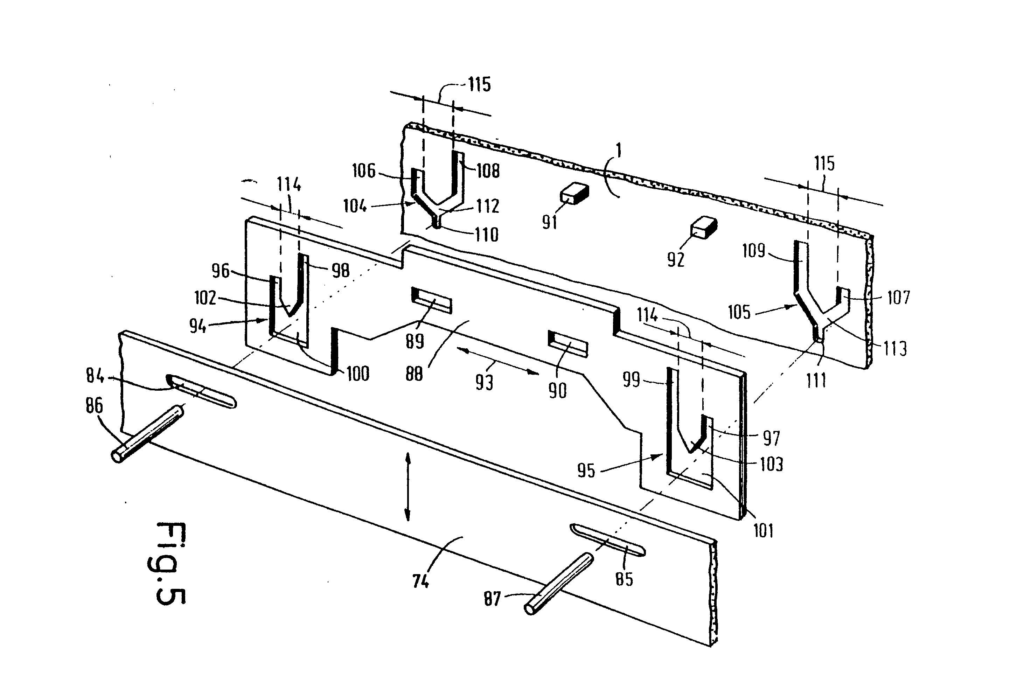

Fig. 5 zeigt anhand der Explosionsansicht in der Kopfplatte 74 geführte Leitstifte 86, 87, die in den Längsschlitzen 84, 85 geführt sind. Die Leitstifte sind damit parallel zu der Verbindungslinie a zwischen den Tonwellen verschiebbar. Die Halterung der Leitstifte 86, 87 an der Kopfplatte 74 ist in den Zeichnungen nicht näher dargestellt. Bei einer einfachen Ausführungsform sind die Leitstifte wie die Stifte von Reißnägeln an einer kappenförmigen Platte befestigt. Es ist aber ebensogut auch möglich, die Leitstifte an den freien Enden von federnden Zungen anzuordnen, die an der Kopfplatte 74 befestigt sind.

Zwischen der Kopfplatte 74 und der Chassisplatte an der Oberseite des Gestells 1 ist eine als Steuermittel dienende Steuerplatte 88 angeordnet. Diese Steuerplatte 88 ist mit Längsschlitzen 89, 90 versehen, durch die Führungsnocken 91, 92 der Chassisplatte hindruchgreifen. Dadurch ist die Steuerplatte 88 parallel zu der gedachten Verbindungslinie zwischen den Tonwellen 9, 10 verschiebbar. Die Verschiebbarkeit ist in Fig. 5 durch einen Doppelpfeil 93 angegeben.

Die Steuerplatte 88 ist an beiden Enden mit U-förmigen Schlitzen 94, 95 versehen. Von den U-förmigen Schlitzen 94 und 95 ist jeweils ein Schenkel 96, 97 kürzer und ein Schenkel 98, 99 länger ausgebildet. Die kürzeren Schenkel sind voneinander weg angeordnet und die längeren Schenkel dementsprechend aufeinander zu. Die Verbindungsbasis 100 und 101 zwischen den kürzeren und längeren Schenkeln ist stark verbreitert ausgebildet. Zwischen den längeren und kürzeren Schenkeln sind Materialzungen 102 und 103 ausgebildet, die an ihren zur Basis 100, 101 gerichteten Enden angespitzt sind.

In der Chassisplatte des Gestells 1 sind als Leitschlitzanordnungen dienende gabelförmige Leitschlitze 104 und 105 angeordnet mit zwei Gabelzinken entsprechend Schenkeln, von denen jeweils einer 106, 107 kürzer als der andere 108, 109 ausgebildet sind. Am Gabelschaft ist ein mittiger Einlaufschlitz 110, 111 vorgesehen, der sich an den trichterförmigen Gabelfuß 112, 113 anschließt. Der gegenseitige Abstand 114 der Schenkel der U-förmigen Leitschlitze 94, 95 in der Steuerplatte 88 ist geringer als der gegenseitige Abstand 115 der Schenkel der gabelförmigen Leitschlitze 104, 105.

Fig. 3 und 4 zeigen, daß das abgewinkelte Ende 80 der Kopfplatte 74 eine Verlängerung aufweist, an der eine Steuerkurve 116 angeordnet ist. Außerdem sind auf dem abgewinkelten Schenkel 80 zwei Stifte 117, 118 vorgesehen, die aus der Zeichenebene herausstehen und deren Verbindungslinie g etwa parallel zur Bewegungsrichtung der Kopfplatte 74 verläuft. Die Steuerkurve 116 arbeitet mit einem ersten Schalter 119 zusammen, dessen Schalthebel 120 von der Steuerkurve 116 betätigt wird, wobei der Schalthebel 120 die Steuerkurve teilweise abfährt, wobei der Schalter 119 geöffnet und geschlossen wird. In der in den Fig. 3 und 4 dargestellten Stellung der Kopfplatte 74 bzw. des abgewinkelten Endes 80 ist der Schalter 119 geschlossen. In dieser Schließstellung ist der Verstärker auf den Magnetkopf 75 geschaltet, und Tonsignale können an die Lautsprecher weitergeleitet werden. Sobald die Kopfplatte zum Schnellspulen oder Ausschalten zurückgezogen wird, öffnet sich der Schalter 119, und der Verstärker ist vom Kopf 75 abgeschaltet. Hierbei erreicht man beispielsweise beim Schnellspulen, daß keine Störsignale abgegeben werden können.

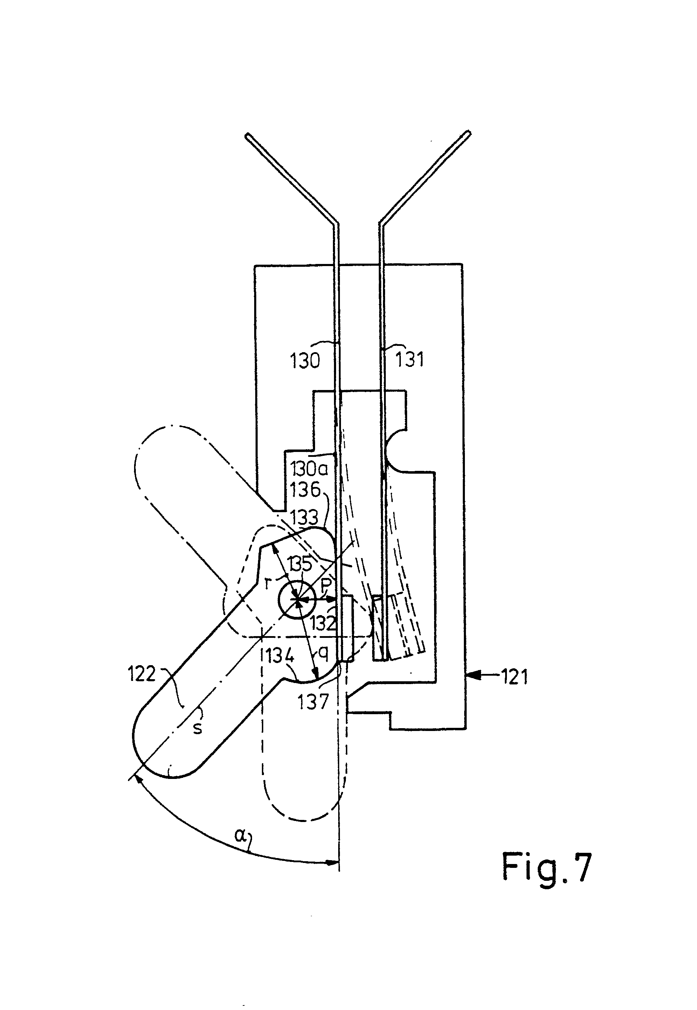

Im Bereich der Stifte 117, 118 ist ein zweiter Schalter 121 angeordnet, dessen Schalthebel 122 zwischen die Stifte 117, 118 greift. Dieser Schalter ist in Fig. 7 vergrößert dargestellt.

Die Stange 62 weist in den Fig. 3 und 4 eine Verknickung 123 auf, die mit einem dritten Schalter 124 zusammenarbeitet. Dieser Schalter 124 hat zwei Kontaktfedern 125, 126, von denen die eine Kontaktfeder mit ihrem freien Kopf 127 eine schräge Fläche 123a der Verknickung 123 ablaufen kann. Bei diesem Ablaufen kann der dritte Schalter 124 geöffnet und geschlossen werden. In der Spiellage nach Fig. 3 und 4 ist der dritte Schalter 124 geschlossen. Der dritte Schalter 124 betätigt den Antriebsmotor 3 des Laufwerkes. Die Stange 62 weist an ihrem hinteren Ende 128 eine Schaltnase 129 auf, die mit dem Schalthebel 122 zusammenwirken kann.

In Fig. 7 ist der zweite Schalter 121 der Schalteinrichtung bei einer entfernten Seitenwand dargestellt, so daß im Inneren des Schalters die Kontaktfedern 130 und 131 sichtbar werden. Mit diesen Kontaktfedern 130 und 131 wirkt der Schalthebel 122 zusammen. Der Schalthebel 122 hat eine erste flache Wand 132, eine zweite flache Wand 133 und eine dritte bogenförmige Wand 134. Die erste flache Wand 132 hat von der Schalthebelschwenkachse 135 einen Abstand p, die zweite flache Wand 133 von der Schwenkachse 135 einen Abstand r und die bogenförmige Wand 134 einen Abstand q. Der Abstand p ist dabei kleiner als der Abstand r und q. Die Schwenkachse 135 des Schalthebels 122 verläuft senkrecht zum Gestell 1. Der Übergang von der ersten Wand zur zweiten Wand bildet eine erste Nase 136, und der Übergang von der ersten Wand 132 zur dritten Wand 134 bildet eine zweite Nase 137. Die zweite Wand 133 erreicht beim Schwenken des Schalthebels 122 über die erste Nase 136 hinweg den federnden Schaltkontakt erst, wenn die erste Nase 136 über den Übertotpunkt hinweggelaufen ist. Die dritte Wand 134 erreicht den federnden Schaltkontakt 130 bereits dann, wenn die zweite Nase 137 den Übertotpunkt noch nicht erreicht hat. Die erste Nase 136 führt dabei den Schalthebel 122 in eine stabile Schaltlage über (in Fig. 7 strichpunktiert dargestellt), während die zweite Nase 137 den Schalthebel 122 in eine instabile Schaltlage überführt (punktiert dargestellt). Die mittlere Stellung ist durchgezogen dargestellt. In dieser Stellung schließt die Mittellinie S des Schalthebels 122 mit der Oberfläche 130a der unberührten Kontaktfeder 130 einen spitzen Winkel ein. In dieser stabilen Stellung ist der Schalter geöffnet, während er in den beiden anderen Schaltstellungen geschlossen ist.

Die Funktionsweise der Vorrichtung läßt sich wie folgt beschreiben:

Wird eine Kassette eingelegt, dann fährt die Stange 62 aus der Stellung nach Fig. 2A in die Stellung nach Fig. 2B aus. Das ist die Stellung der Stange 62, die in den Fig. 3 und 4 dargestellt ist. Durch das Ausfahren ist der dritte Schalter 124 aus seiner geöffneten Schaltung überführt worden in seine geschlossene Schaltung, wodurch der Motor nunmehr erregt wird und sich zu drehen beginnt. Damit drehen sich auch die Schwungscheiben 7 und 8, und zwar in gegensinniger Richtung. Gleichzeitig drehen sich die Zahnräder 11 und 12 und die mit ihnen kämmenden Zahnräder 14 und 17.

Durch das Ausfahren der Auswurfstange 62 schwenkt der Rasthebel 58 nach Fig. 2A um die Achse 59, und der Raststift 65 kommt in dem Wirkbereich mit der Herzkurve 56 nach Fig. 2B. Ebenfalls ist durch das Ausfahren der Schaltnase 129 der Schalthebel, der sich in der punktierten Lage nach Fig. 7 befunden hat, freigegeben worden, so daß er in seine mittlere Stellung (durchgezogener Strich in Fig. 7) eingeschwenkt ist. Durch das Schließen des dritten Schalters 124 und das Öffnen des zweiten Schalters 121 ist über eine nicht dargestellte elektronische Schaltung das Gerät von Radiobetrieb auf Bandbetrieb elektrisch umgeschaltet.

Weil die Zahnräder 14 und 17 nicht in Eingriff sind mit den Zahnrädern 24 und 25, drehen die beiden Wickeldorne 20 und 21 nicht mit. Die Scheiben 41 und 42 sind über ihre separaten Reibungskupplungen mit den Wickeldornen 20, 21 verbunden und stehen damit auch still. Da beim Eindringen der Kassette ein Drehmoment auf das Schaltelement 46 fehlt, weil die Bandwickel nicht umlaufen und das Band still steht, bleibt das Schaltelement 46 in der in Fig. 1 dargestellten Stellung stehen und kommt damit mit dem Stift 49 auf die Außenseite der Steuerkurve 51. Damit macht das Schaltelement 46 eine Bewegung im Uhrzeigersinn gemäß Pfeil 46a und schwenkt das Verbindungselement 52 entgegen dem Uhrzeigersinn (Pfeil 67). Weil der Rasthebel 58 geschwenkt ist und der Stift 65 der Herzkurve 56 im Wirkbereich ist, umläuft der Stift 65 nun die Wand 68 der Herzkurve 56 und fällt in die Mulde 70 ein. Damit ist das Verbindungselement in einer eingeschwenkten Stellung eingerastet (siehe Fig. 2B).

Durch das Schwenken des Verbindungselementes 52 entgegen dem Uhrzeigersinn in Richtung des Pfeiles 67 hat sich der Nocken 71 nach innen bewegt und gegen die Blattfeder 72 gedrückt. Die Blattfeder drückt ihrerseits über die Halterungen 76 und 77 gegen die Kopfplatte 74 und versucht, sie in Richtung auf die Tonwellen 9, 10 zu schieben. Nun kommt die Wirkung der Steuerplatte 88 zur Geltung.

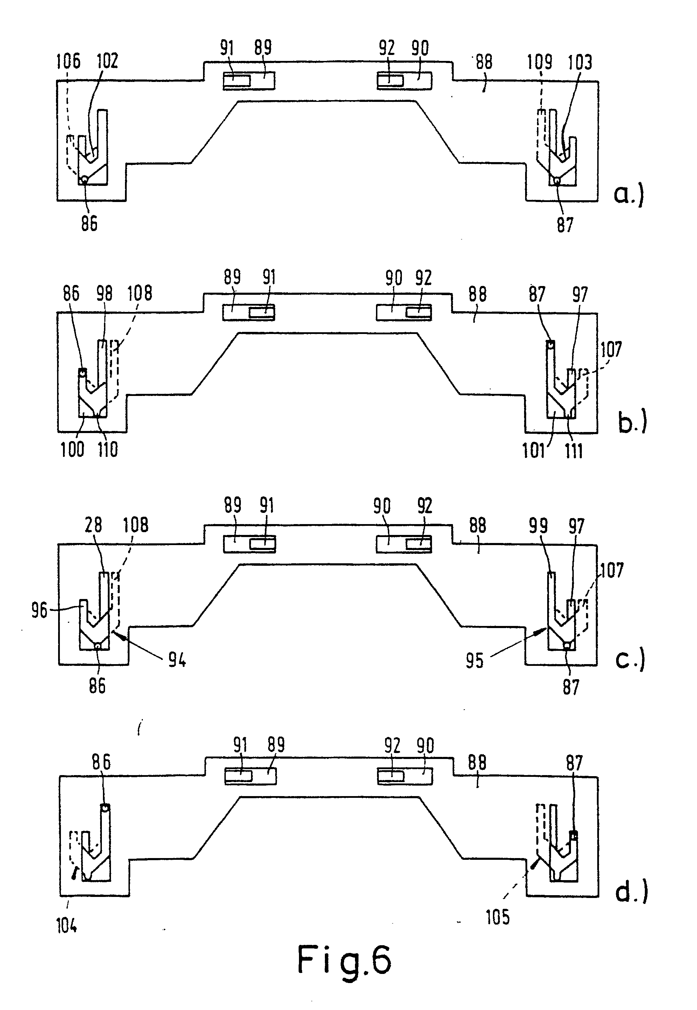

Vor dem Einschwenken des Nockens 71 war die Kopfplatte 74 von den Tonwellen weggefahren. Die Leitstifte 86, 87 waren dadurch in die Einlaufsschlitze 110 und 111 eingelaufen (vergl. Fig. 5). Die Steuerplatte 88 hat die aus Fig. 6A zu ersehende angenommene Stellung. Beim Vorfahren der Kopfplatte 74 in Richtung der Tonwellen 9, 10 fahren die Leitstifte 86, 87 nach vorn und laufen auf der linken Seite der Zungen 102, 103 auf und zugleich in die linken Schenkel 106 und 109 der gabelförmigen Leitschlitze 104, 105. Bei dem Einfahren der Leitstifte 86, 87 in die Schenkel 106 und 109 nehmen die Leitstifte 86, 87 die Steuerplatte 88 nach links mit, so daß sich nunmehr die Schenkel 96, 106 und 99, 109 überdecken. Der linke Leitstift 86 findet damit in dem kürzeren Schenkel beim Vorfahren einen Anschlag, während der rechte Leitstift 87 frei in Richtung auf die Tonwelle 10 vorlaufen kann (Fig. 6B). Damit schwenkt die vorgedrückte Kopfplatte 74 auf der rechten Seite derartig nach vorn, daß die rechte Andruckrolle 79 gegen die rechte Tonwelle 10 stößt. Die andere Tonwelle bleibt unbelastet. Damit läuft das Band in der aus Fig. 3 zu ersehenden Richtung.

Wie schon erwähnt, ist beim Nach-vorn-Schieben der Kopfplatte 74 der erste Schalter 119 geschlossen worden. Damit ist der Verstärker elektrisch mit dem Kopf 75 verbunden, und Tonsignale können von dem Band auf die Lautsprecher übertragen werden. Gleichzeitig ist der Schalthebel 122 des zweiten Schalters 121 von dem Stift 117 aus der durchgezogen dargestellten stabilen Lage nach Fig. 7 in die strichpunktierte stabile Schaltlage überführt worden. Der Schalter 121 ist dadurch geschlossen, und die richtigen Tonspuren des Kopfes 75 sind angeschaltet. Auf nicht dargestellte Weise kann eine Leuchtanzeige die Bandzugrichtung durch die Wirkung dieses Schalters angeben.

Wird bei der Darstellung nach Fig. 3 mit Abspielen eines Bandes in der normalen Vorwärts-Laufrichtung ein Schnellspulen gewünscht, dann wird die Taste 31 eingedrückt für schnellen Vorlauf und 32 für schnellen Rücklauf. Die Kopfplatte 74 wird dabei, wie schon erwähnt, ein Stück zurückgezogen, jedoch nicht ganz in die Stop- bzw. Auswurfstellung. Das hat zur Folge, daß der erste Schalter 119 sich öffnet, so daß keine Störsignale über die Lautsprecher abgegeben werden können für die Zeit des Schnellspulens. Wichtig ist dabei, daß der Abstand der Stifte 117 und 118 so gewählt ist, daß bei diesem teilweisen Zurückziehen der Kopfplatte 74 der Schalthebel 122 aus seiner vorgegebenen Stellung nicht vom Stift 118 berührt wird. Beim Schnellspulen werden deshalb die Tonspuren nicht umgeschaltet. Die Schaltrichtung bleibt erhalten. Das ist wichtig für das Pausensuchen, wobei es notwendig ist, daß dieselben Spuren sowohl beim Abspielen als beim Pausensuchen eingeschaltet bleiben.

Beim Erreichen des Bandendes bleibt das Band stehen. Dadurch wird das Schaltelement 46 mit seinem Stift 49 erneut nach außen im Uhrzeigersinn geschwenkt. Dadurch wird das Verbindungselement 52 erneut entgegen dem Uhrzeigersinn verschwenkt (Fig. 2B) in Richtung des Pfeiles 67. Das Verbindungselement 52 wird bei diesem Bewegen über den Normalhub, der bei der eingerasteten Lage vorliegt, in einem Überhub weitergeschwenkt. Der Überhub wird möglich, da der Nokken 71 gegen die Blattfeder 72 über die Hebel 76, 77 an der Kopfplatte 74 drückt und damit Ausweichspielraum in Richtung auf die Kopfplatte hat. Bei diesem Überhub fährt der Stift 65 aus der Mulde 70 heraus, und der Rastmechanismus 57 entrastet. Unter Wirkung der Feder 54 schwenkt das entrastete Verbindungselement 52 nun im Uhrzeigersinn, so daß der Hocken 71 nach außen fährt. In dieser Lage ist die Kopfplatte nach außen zurückgefahren und die Leitstifte 86, 87 sind wieder in die Einlaufschlitze 110 und 111 eingelaufen. Die Steuerplatte 88 ist in ihrer alten Stellung verblieben. Die Zungen 102 und 103 liegen damit noch immer in einer nach links verschobenen Lage gegenüber der mittigen Lage der Einlaufschlitze 110 und 111 (Fig. 6C).

Beim Zurückschieben der Kopfplatte ist der erste Schalter 119 wieder geöffnet worden, so daß keine Störsignale auf die Lautsprecher gegeben werden können. Gleichzeitig ist der Schalthebel 122 von dem Stift 118 in die mittlere Schaltlage nach Fig. 7 umgelegt worden. Der Schalter 121 ist damit geöffnet. Das hat zur Folge, daß die Tonspuren umgeschaltet werden auf Reversebetrieb. Der Schalthebel 122 hat damit die aus Fig. 4 ersichtliche Stellung.

Es kommt nun der Reversiervorgang. Das Schaltrad 14 dreht nach wie vor weiter. Da sich die Kopfplatte 74 zurückgezogen hat, hat sie ihr umgebogenes Ende 80 auch nach außen gezogen und damit den Schwenkarm 16 derart verschwenkt, daß das Schaltrad 14 außer Eingriff ist vom Spielrad 25. Damit wird das Spielrad 25 nicht mehr angetrieben. Das Detektionsorgan 40 stellt Bandstillstand fest. Aufs Neue wird das Schaltelement 46 im Uhrzeigersinn verschwenkt. Das Schaltelement 46 drückt gegen das Verbindungselement 52 und schwenkt dieses erneut entgegen dem Uhrzeigersinn in Richtung des Pfeiles 67. Damit umfährt der Stift 65 erneut die Herzkurve 56, und der Stift fällt lexztlich wieder in die Mulde 70 ein, und das Verbindungselement 52 verrastet. Der Hocken 71 ist nun wieder nach vorn geschoben, und die Kopfplatte 74 nimmt nach ihrem Vorfahren die aus Fig. 4 ersichtliche Stellung ein. Das Zahnrad 17 ist über das umgebogene Ende 81 der Kopfplatte 74 mit dem Zahnrad 11 und mit dem Spielrad 24 im Eingriff. In dieser Lage nach Fig. 4 liegt die Andruckrolle 78 an der Tonwelle 9 an, und das Band wird in entgegengesetzter Richtung transportiert.

Auch in der Reverse-Abspielrichtung nach Fig. 4 kann Schnellspulen gewünscht sein und eingeleitet werden durch Eindrücken einer der beiden Tasten 31 oder 32. Für schnellen Vorlauf ist dann die Taste 32 zu drücken, während für schnellen Rücklauf die Taste 31 zuständig ist. Der gegenseitige Abstand der Stifte 117 und 118 hat hierbei wieder zur Folge, daß der Schalthebel 122 beim Zurückschieben der Kopfplatte 74 von den Stiften 117 und 118 nicht berührt wird und deswegen auch nicht umgelegt wird, sondern in seiner mittleren Stellung verbleibt. Die Spuren werden also nicht umgeschaltet.

Die Umkehrung der Bandtransportrichtung ist wieder durch die Leitschlitzanordnung bewirkt worden, die in Fig. 6 in verschiedenen Stellungen dargestellt ist. Die letzte beschriebene Stellung war die Stellung nach Fig. 6C. In dieser Stellung ist die Steuerplatte 88 nach links verschoben, und die Leitstifte 86, 87 liegen in den Einlaufschlitzen 110 und 111. Durch das erneute Vorfahren der Kopfplatte 74 sind die Leitstifte 86, 87 ebenfalls nach vorn gefahren und sind gegen die rechten Schrägflächen der angespitzten Zungen 102 und 103 gelaufen. Die Leitstifte 86, 87 wurden dadurch nach rechts verschoben und konnten weiter einfahren in die Schenkel 108 und 107. Die Querverschiebung der Leitstifte 86, 87 ist möglich durch das Verrutschen der Leitstifte 86, 87 in den Längsschlitzen 84, 85. Bei dem Einfahren in die Schenkel 107 und 108 haben die Leitstifte 86, 87 die Steuerplatte 88 nach rechts mitgenommen, so daß sich nunmehr die Schenkel 108 und 98 sowie 107 und 97 überdecken. Damit haben sich die Zungen 102, 103 wieder so versetzt, daß bei einem erneuten Zurückfahren und Vorfahren der Leitstifte diese wieder auf die linken Schrägflächen der angespitzten Zungen 102 und 103 auflaufen können. Die Stellung der Leitschlitzanordnung in diesem Fall ist aus Fig. 6D zu ersehen. Der Leitstift 87 hat in den kürzeren Schenkeln 107 und 97 auf seinem Vorfahrweg einen Anschlag vorgefunden, der die Kopfplatte 74 daran hindert, auf der rechten Seite weiter vorzufahren. Auf der linken Seite hat der Leitstift 86 keinen Anschlag vorgefunden, und er konnte in den Schenkeln 108 und 89 so weit vorfahren, daß die Feder 72 die linke Seite der Kopfplatte 74 die Andruckrolle 78 gegen die Tonwelle 9 drücken konnte. Diese Stellung ist aus Fig. 4 zu ersehen.

Die Stange 62 kann auch für das manuale Umkehren der Bandlaufrichtung eingesetzt werden. Hierbei wird die Stange 62 nur ein Stück eingeschoben. Wie sich aus Fig. 2B ergibt, wird dabei der Rastmechanismus 57 entrastet. Der Führungsstift 60 nach Fig. 2B durchläuft dabei den Führungsschlitz 61 nur in seiner ersten Hälfte. Der Mechanismus durchläuft dabei den Schaltvorgang zur Umkehrung der Bandrichtung, wie zuvor beschrieben wurde. Die Bandtransportrichtung kehrt damit um. Dabei ist wichtig, daß der dritte Schalter 124 geöffnet wird, so daß der Motor 3 anhält. Dabei wird nicht auf Radio umgeschaltet, weil die Schaltnase 129 den Schalter 121 noch nicht in seine instabile Lage umgeschaltet hat aufgrund des begrenzten Einschubweges. Wird die Taste 63 wieder losgelassen, dann kehrt sie unter Federkraft wieder in ihre ausgefahrene Stellung zurück. Das hat zur Folge, daß sich der Schalter 124 wieder schließt, der Motor 3 wieder angeschaltet wird und nach wiederholtem Schaltvorgang (wie vorher beschrieben) der Bandbetrieb in umgekehrter Richtung wieder anläuft.

Wird dagegen die Stange 62 mittels der Taste 63 zum Auswerfen ganz eingedrückt, dann stößt die Schaltnase 129 den Schalthebel 122 in die punktierte Stellung nach Fig. 7. Dies ist eine instabile Schaltstellung, in der der Schalter 121 geschlossen ist. Diese Schaltstellung bleibt aufrecht erhalten, da die Stange 62 nach dem Auswerfen einer Kassette eingedrückt bleibt, solange keine neue Kassette eingeschoben wird. Das Eindrücken der Stange 62 hat zur Folge, daß der Motorschalter 124 geöffnet wird und der Motor 3 stehen bleibt. Das Öffnen des Schalters 124 in Kombination mit dem Schließen des Schalters 121 bewirkt bei der elektronischen Schaltung des Gerätes, daß das Gerät vom Bandbetrieb auf Radiobetrieb umgeschaltet wird. Weiterhin hat das Eindrücken, wie in Fig. 2A dargestellt, zur Folge, daß der Rastmechanismus 57 ausrastet und die Feder 54 die Kopfplatte 74 ausfährt. Die Kopfplatte bleibt bei stehendem Motor 3 in der ausgeschobenen Stellung stehen.

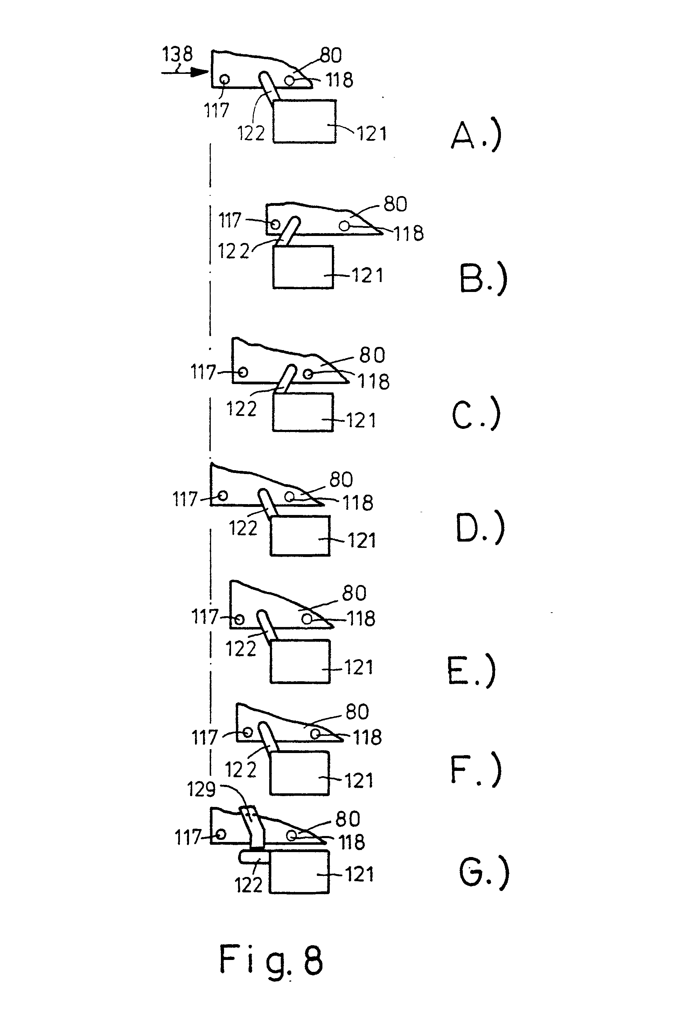

Fig. 8 zeigt anhand von sieben Einzelbildern die einzelnen Schaltvorgänge des Schalters 121. In Fig. 8A ist der Schalthebel 122 in einer Stelle, wie in Fig. 7 ausgezogen dargestellt. Dies ist die Lage, in der die Kopfplatte 74 ganz zurückgezogen ist. Dies ist beispielsweise die Lage bei Bandende, d. h. zwischen Abschaltvorgang und neuem Einschaltvorgang. Wird die Kopfplatte nun in Richtung des Pfeiles 138 nach vorn geschoben in Richtung auf die Tonwellen, dann legt der Stift 117 den Schalthebel 122 in die aus Fig. 8B zu ersehende Stellung. Dies ist die Stellung gemäß Fig. 3 bei normalem Vorlauf und Bandspielbetrieb. Fig. 8C zeigt nun, daß der Schalthebel 122 nicht verstellt wird, wenn die Kopfplatte 74 zum Zwecke des Schnellspulens aus der normalen vorgeschobenen Lage ein Stück zurückgezogen wird.

Beispielsweise beim Erreichen des Bandendes wird die Kopfplatte 74 zurückgefahren nach links, wobei der Schalthebel 122 umgelegt wird in die mittlere Stellung nach Fig. 7 mit Hilfe des Stiftes 118 (Fig. 8D). Zum Einleiten des Reversebetriebes wird die Kopfplatte wieder vorgefahren in die Stellung nach Fig. 8E. Wird nun im Reversebetrieb ein Schnellspulen gewünscht, dann bewegt sich die Kopfplatte 74 im Bereich der Stifte nahezu gar nicht, weil sie sich um einen nahe der Stifte gelegenen Punkt dreht bis zu einer parallelen Lage gegenüber der Verbindungslinie a. Dieser Schnellspulbetrieb ist in Fig. 8F angedeutet.

Schließlich ist in Fig. 8G eine Stellung dargestellt, in der die Kopfplatte ganz zurückgeschoben ist und die Stange 62 mit der Schaltnase 129 den Schalthebel 122 niedergedrückt hat. Dies ist Voraussetzung, daß, wie bereits ausgeführt, vom Bandbetrieb auf Radiobetrieb übergegangen werden kann.

## Ansprüche

1. Magnetbandkassettengerät mit einer Bedienungsstange (62), die beim Einlegen einer Kassette ausgefahren und beim Auswerfen der Kassette eingedrückt wird, und einer Kopfplatte (74), die für den Bandbetrieb nach vorne geschoben und für die Umkehrung des Bandbetriebes zurückgeschoben wird, wobei am Gerätechassis (1) ein Schalter (121) angeordnet ist, der in seinem Gehäuse einen um eine Schwenkachse (135) schwenkbaren Schalthebel (122) aufweist, der auf Schaltkontakte (130, 131) einwirkt und der in drei Betriebslagen stellbar ist, wobei der Schalthebel (122) eine mittlere Stellung gegenüber den Schaltkontakten (130, 131) aufweist, in der die Schaltkontakte (130, 131) offen bleiben, und wobei beiderseits der mittleren Schalthebelstellung zwei die Schaltkontakte (130, 131) schließende Schließstellungen vorhanden sind, von denen die eine stabil und die andere instabil ist, daß die Bedienungsstange (62) mit einer Schaltnase (129) versehen ist, die beim Eindrücken der Bedienungsstange (62) den Schalthebel (122) aus der mittleren Stellung in die instabile Schließstellung schwenken und dort festhalten kann, wodurch vom Bandbetrieb auf Radiobetrieb umgeschaltet wird, und beim Ausfahren der Bedienungsstange aus der instabilen Schließstellung in die mittlere Stellung freigeben kann, wodurch vom Radiobetrieb auf Bandbetrieb umgeschaltet wird, und an der Kopfplatte (74) zwei auf Abstand angeordnete Ansätze (117, 118) vorgesehen sind, von denen der erste Ansatz (117) den Schalthebel (122) aus der mittleren Stellung in die stabile Schließstellung überführt, wodurch Tonspuren des Kopfes (75) angeschaltet werden, wenn die Kopfplatte (74) für den Bandbetrieb nach vorne geschoben wird, und der zweite Ansatz (118) den Schalthebel (122) aus der stabilen Schließstellung in die mittlere Stellung umlegt, wodurch die Tonspuren des Kopfes (75) umgeschaltet werden, wenn die Kopfplatte (74) für die Umkehrung des Bandbetriebes zurückgeschoben wird, wobei der Schalthebel (122) in seiner stabilen Schließstellung und seiner mittleren Stellung von den Ansätzen (117, 118) freiliegt.

2. Magnetbandkassettengerät nach Anspruch 1, dadurch gekennzeichnet, daß die Verbindungslinie (g) zwischen den Ansätzen (117, 118) etwa parallel zur Bewegungsrichtung der Kopfplatte (74) liegt und daß der Abstand zwischen den Ansätzen (117, 118) derartig ist, daß eine Bewegung der Kopfplatte (74) aus einer Spiellage in eine vom Magnetband weg zurückgezogene Spullage erreichbar ist, ohne den Schalthebel (122) zu betätigen.

3. Magnetbandkassettengerät nach den Ansprüchen 1 oder 2, dadurch gekennzeichnet, daß vor dem Erreichen der schaltenden Stellung der Bedienungsstange (62) die Kopfplatte (74) immer den Schalthebel (122) in die mittlere Stellung geschwenkt hat.

**Claims**

1. A magnetic-tape-cassette apparatus comprising an actuating rod (62), which is moved outward when a cassette is inserted and which is pressed inward when the cassette is ejected, and a head-mounting plate (74), which is moved forward for the tape mode and which is moved back for reversal of the tape mode, a switch (121) being arranged on the chassis (1) of the apparatus, which switch inside its housing comprises a switching lever (122) which is pivotable about a pivotal axis (135), which lever acts upon switching contacts (130, 131) and can be set to three operating positions, said switching lever (122) having a central position relative to the switching contacts (130, 131), in which the switching contacts (130, 131) remain open, and two closing positions, of which one position is stable and the other position is unstable, which closing positions are situated at opposite sides of said central position of the switching lever and in each of which the switching contacts (130, 131) are closed, the actuating rod having a switching nose (129) which when the actuating rod (62) is pressed inward is capable of pivoting the switching lever (122) from the central position into and retaining it in the unstable closing position, thereby switching over from the tape mode to the radio mode, and when the actuating rod is moved outward enables a movement from the unstable closing position into the central position, thereby switching over from the radio mode to the tape mode, the head-mounting plate (74) being provided with two spaced-apart projections (117, 118), of which the first projection (117) sets the switching lever (122) from the central position to the stable closing position, causing the tracks of the head (75) to be connected when the head-mounting plate (74) is moved forward for the tape mode, and the second projection (118) sets the switching lever (122) from the stable closing position to the central position, causing the tracks of the head (75) to be changed over when the head-mounting plate (74) is moved back for reversal of the tape mode, the switching lever (122) being clear of the projections (117, 118) in its stable closing position and its central position.

2. A magnetic-tape-cassette apparatus as claimed in Claim 1, characterized in that the connecting line (g) between the projections (117, 118) extends substantially parallel to the direction of movement of the head-mounting plate (74) and the distance between the projections (117, 118) is such that a movement of the head-mounting plate (74) from a playing position into a winding position, in which it is withdrawn from the magnetic tape, can be obtained without actuating the switching lever (122).

3. A magnetic-tape-cassette apparatus as claimed in Claim 1 or 2, characterized in that the head-mounting plate (74) has always pivoted the switching lever (122) to its central position before the switching position of the actuating rod (62) is reached.

**Revendications**

1. Appareil à cassette de bande magnétique équipé d'une tige de manoeuvre (62) qui sort lors de l'introduction d'une cassette et est enfoncée lors de l'éjection de la cassette, et une plaque porte-tête (74) qui est déplacée vers l'avant pour le mode de bande et est ramenée en arrière pour l'inversion du mode de bande, le châssis (1) de l'appareil portant un commutateur (121) qui, dans son boîtier, comporte un levier de commutation (122) qui peut pivoter autour d'un axe de pivotement (135), qui agit sur des contacts de commutation (130, 131) et qui peut être commuté dans trois positions de fonctionnement, en l'occurrence dans une position médiane par rapport aux contacts de commutation (130, 131), dans laquelle les contacts de commutation (130, 131) restent ouverts, et, de part et d'autre de cette position médiane, dans deux positions de fermeture des contacts de commutation (130, 131), dont l'une est une position stable et l'autre, une position instable, la tige de manoeuvre (62) étant pourvue d'un bec de commutation (129) qui, lors de l'enfoncement de cette tige de manoeuvre (62), peut faire pivoter le levier de commutation (122) de la position médiane dans la position de fermeture instable et peut l'y maintenir, ce qui provoque une commutation du mode de bande au mode radio, et qui, lors de la sortie de la tige de manoeuvre, permet le passage de la position de fermeture instable à la position médiane, ce qui provoque la commutation du mode radio au mode de bande, et deux saillies espacées l'une de l'autre (117, 118) sont prévues sur la plaque porte-tête (74), la première saillie (117) faisant passer le levier de commutation (122) de la position médiane dans la position de fermeture stable, grâce à quoi les pistes audio de la tête (75) sont mises en circuit, lorsque la plaque porte-tête (74) est déplacée vers l'avant pour le mode de bande, et la deuxième saillie (118) faisant passer le levier de commutation (122) de sa position de fermeture stable dans sa position médiane, grâce à quoi les pistes audio de la tête (75) sont commutées, lorsque la plaque porte-tête (74) est ramenée en arrière en vue de l'inversion du mode de bande, le levier de commutation (122) étant dégagé des saillies (117, 118) dans sa position de fermeture stable et dans sa position médiane.

2. Appareil à cassette de bande magnétique suivant la revendication 1, caractérisé en ce que la ligne de liaison (g) entre les saillies (117, 118) est en substance parallèle à la direction de mouvement de la plaque porte-tête (74) et la distance entre les saillies (117, 118) est telle qu'un déplacement de la plaque porte-tête (74) à partir d'une position de lecture vers une position de bobinage rétractée par rapport au trajet de la bande magnétique peut être atteint sans actionner le levier de commutation (122).

3. Appareil à cassette de bande magnétique suivant la revendication 1 ou 2, caractérisé en ce que, avant que soit atteinte la position de commutation de la tige de manoeuvre (62), la plaque porte-tête (74) a fait pivoter le levier de commutation (122) dans la position médiane.

Fig.1

Fig.2a

Fig.2b

EP 0 150 078 B1

Fig.3

13

Fig.4

Fig.5

Fig.6

Fig.7

Fig. 8